# EUROPEAN PATENT APPLICATION

(11) **EP 4 390 327 A1**
(43) Date of publication of application: **26.06.2024**
(21) Application number: 22275166.1
(22) Date of filing: 20.12.2022
(51) Int. Cl.: G01D 5/34, G01D 5/38

(54) **ENCODER APPARATUS**

(71) Applicant: Renishaw PLC, Wotton-under-Edge, Gloucestershire GL12 8JR (GB)
(72) Inventor: The designation of the inventor has not yet been filed
(74) Representative: Rolfe, Edward William

(57) **Abstract**

A position measurement encoder apparatus, comprising: a scale comprising a series of features which are readable by a readhead so as to determine a relative position of the scale and the readhead, and which diffract light into multiple diffraction orders; a readhead comprising a light source for illuminating the scale, and at least a first sensor configured to detect a signal produced thereat by one or more diffraction orders produced by the scale; wherein the readhead further comprises a diffraction order encoder which encodes at least one diffraction order with a different optical state to that of at least one other diffraction order.

## Description

This invention relates to a position measurement encoder apparatus.

A position measurement encoder apparatus (hereinafter referred to as an "encoder apparatus" or "position encoder") can be used to determine relative movement of two relatively moveable parts of an apparatus. A position encoder typically comprises a scale and a readhead (one provided on one part of the apparatus and the other on the other part of the apparatus). The scale can comprise a series of features which the readhead can read so as to measure its position along the scale (the scale's features, for example, could be provided on a substrate which is fastened to the part of the apparatus, or could even be formed integrally as part of the apparatus).

A so-called "incremental" position encoder can work, for example, by "counting" its position along the length of the scale, e.g. from its start-up position and/or from a defined reference marker(s) on the scale. As will be understood, the way in which the "counting" of the readhead's position is done can vary from encoder apparatus to encoder apparatus. For example, one way is to generate a resultant field, such as an interference fringe pattern ("fringe field") or modulated spots, at a detector in the readhead, which changes with relative movement. For example, light from a source within the readhead can hit the scale which diffracts the light into a number of diffraction orders. The diffraction orders interfere/interact/recombine at the detector to produce the resultant field. Optionally, an optical element (for example a diffraction grating and/or lens) within the readhead can be provided which redirects/deflects diffraction orders such that they interfere/interact at the detector so as to produce the resultant field. As the scale and readhead move relative to each other, the resultant field changes. The readhead can record and/or report movement and position by monitoring the change of the resultant field (e.g. movement of the interference fringe pattern/fringe field). Such a position encoder is described in US5861953. As will be understood, reference marks can be provided, for instance next to and/or embedded within the scale's diffraction features, in order to provide defined reference positions. Such a position encoder is described in US7659992.

So-called "absolute" position encoders are also known which enable the absolute position of the readhead relative to a scale to be determined without the need to count from a predetermined position, such as a reference mark or an end position of the scale. Absolute position encoders typically comprise a scale with unique position data formed on it along the measuring length of the scale. The data can be in the form of, for instance, a pseudorandom sequence or discrete codewords. By reading this data as the scale reader passes over the scale, the scale reader can determine its absolute position. Examples of absolute position encoders are described in US7499827, US10132657 and US2012/0072169. It is known that some absolute encoders use incremental scales alongside absolute scales. It is also known (and for example described in US7499827) that, optionally, the absolute scale retains sufficient periodicity such that the scale can be used as a periodic incremental scale. Either way, such incremental scale can be used, for example, to fine-tune the determined absolute position. Optionally, such a system can be used such that after start-up and the absolute position has been determined, the relative position of the readhead and scale is subsequently measured by "counting" the change in position using the incremental scale. Such an incremental scale can be read in the same way as mentioned above, e.g. by analysing a resultant field produced (at a sensor in the readhead) by the diffraction orders created by the scale.

The present invention relates to improvements in those types of encoder apparatus which rely on the diffraction of light to form a resultant field on a sensor in the readhead.

According to a first aspect of the invention there is provided a position measurement encoder apparatus, comprising: a scale comprising a series of position features which are readable by a readhead, the series extending along a measuring dimension; a readhead comprising a light source for illuminating the scale, and at least a first sensor configured to detect a signal produced thereat by one or more diffraction orders produced by the scale's series of position features which can be used to determine the relative position of the scale and readhead along the measuring dimension; wherein the readhead further comprises a diffraction order encoder which encodes at least one diffraction order with a different optical state (or in other words, a different optical property) to that of at least one other diffraction order.

Providing the readhead with a diffraction order encoder which encodes at least one diffraction order with a different optical state (or in other words, a different optical property) to that of at least one other diffraction order can be helpful in providing an improved signal formed at the readhead's sensor. For instance, it can mean that the diffraction orders which have different optical states/properties have reduced/no optical interference with each other (even if they both reach the sensor), which can provide an improved signal, such as e.g. a signal with improved visibility and/or rideheight tolerance and/or improved harmonic quality. It can also enable different diffraction orders to be filtered and/or optical separated based on their different optical states. Furthermore, such improvements can be achieved without having to design the scale such that it does not produce certain diffraction orders, or such that it produces diffraction orders with the certain optical states, thereby simplifying scale design and/or manufacture, which can lead to cost benefits and/or facilitate ease of producing longer lengths of scale.

In those embodiments in which a 0^{th} and +/-1^{st} diffraction orders are present (e.g. when the scale comprises an amplitude scale), the diffraction order encoder can be configured to encode the 0^{th} diffraction order with an optical state that is different to the +/-1^{st} diffraction order. Typically these are the orders with the largest intensity and have the greatest influence on the signal formed at the readhead's sensor(s), therefore it can be beneficial to encode them with different optical states to reduce/avoid their interaction at the sensor and/or such that they can be selectively attenuated/blocked from reaching/being sensed by the sensor (as described in more detail below). Although it can be possible to encode the +1^{st} diffraction orders to have a different optical state to the -1^{st} diffraction order, typically it is beneficial to configure the readhead such that they have the same optical state (e.g. the same polarisation and/or wavelength).

The position measurement encoder apparatus could be a linear encoder or a rotary encoder apparatus. Accordingly, the scale could be a linear scale or a rotary scale (in which case the scale could be a ring scale or disc scale).

The readhead can comprise at least a first and a second sensor. For instance, the second sensor can also be configured to detect a signal produced thereat by said diffraction orders from the scale. The first and second sensors can be configured to detect the same type of signal (e.g. both can be incremental signals, or both can detect absolute signals), or different types of signals (e.g. one of them can detect an incremental signal and one of them can detect a reference mark signal or an absolute signal). Optionally, both the first and second sensors detect signals formed from said one or more diffraction orders.

As will be understood, the output of the first sensor (and of the second sensor if present) can provide one or more signals which can be used to indicate relative position information (concerning the readhead and scale). As explained in more detail later in this document, such position information can be incremental or absolute position information. Such position information can be an index (also known as a "reference", or "datum") position information. The position information could be linear position information or angular position information (e.g. in the case of a rotary encoder apparatus). The readhead could output the raw, unprocessed signal(s) from the sensor(s). Optionally, the readhead can process the signal(s) from the sensor(s) and output one or more signals derived from the signal(s) from the sensor(s). As is commonly the case with position encoders, the readhead can output sin and cos signals (commonly referred to as "quadrature" signals) which change with a change in the relative position (i.e. which change with relative motion) of the scale and readhead. The readhead could output analogue or digital signals representative of the relative position of the scale and readhead. For instance, the quadrature signals could be analogue or digital quadrature signals. Optionally, the readhead can maintain and output an incremental "count" of the position of the readhead and scale (e.g. which could be counted from an index position). Optionally, the readhead can output digital codewords representative of the relative position of the scale and readhead. For example, the readhead can output absolute digital codewords representative of the absolute relative position of the scale and readhead. As will also be understood, a controller can use the output of the readhead to determine how to control the apparatus/device on which the encoder apparatus is installed.

It can be preferable to configure the readhead such that at least one diffraction order is at least partially filtered out based on its optical state, so as to at least partially attenuate its influence on the production of the signal sensed by the first sensor (and/or second sensor if present). Doing so can provide an even greater improvement in the quality of the signal sensed by the sensor(s), especially for instance, if the at least one diffraction order is substantially completely filtered out such that it does not contribute at all to the signal sensed by the sensor(s). For example, the position measurement encoder apparatus can be configured to i) at least partially (e.g. substantially) filter out the 0^{th} diffraction order so as to at least partially attenuate (e.g. substantially fully attenuate/remove) its influence on the production of the signal sensed by the first sensor, or ii) at least partially (e.g. substantially) filter out the +/-1^{st} diffraction order so as to at least partially attenuate (e.g. substantially attenuate/remove) its influence on the production of the signal sensed by the first sensor. Option i) can be particularly preferred when the sensor (e.g. the first sensor) is configured to sense an incremental position signal, such as an interference fringe pattern or modulated spots. Option ii) can be particularly preferred when the sensor (e.g. the second sensor) is configured to sense a reference mark or absolute code on the scale. If both first and second sensors are present, the light that produces the signal at the first sensor can be different (e.g. filtered differently) to the light that produces the signal at the second sensor.

Whilst it is possible to obtain some benefit from only partially attenuating the influence of a particular diffraction order (e.g. the 0^{th} diffraction order, or the +/-1^{st} diffraction orders) on the production of signal formed at the first sensor, e.g. by attenuating the influence the particular diffraction order on the production of the signal by at least 50%, it is preferable that the influence the particular diffraction order on the production of the signal sensed by the first sensor is substantially fully attenuated, e.g. by at least 90%, for example by at least 95%, for instance by at least 98%. In a particularly preferred embodiment, the readhead is configured such that the particular diffraction order (e.g. the 0^{th} diffraction order) has substantially no influence whatsoever on the production of the signal sensed by the first sensor.

Such filtering could be achieved by configuring the sensor such that it is blind or insensitive to a particular optical state. In preferred embodiments, such filtering can be provided by a filter located in front of the sensor(s) so as to at least partially block the filtered-out diffraction order from reaching the sensor(s). For example, a first-sensor filter can be provided which is configured to filter light based on its optical state before it falls on the first sensor. Optionally, a second-sensor filter is provided which is configured to filter light based on its optical state before it falls on the second sensor, if present. Optionally, there is provided both a first-sensor filter and a second-sensor filter. In such a case, the first-sensor filter and second-sensor filters can be configured to filter light differently to each other, based on the optical state of the diffraction orders.

Said optical state can comprise a state of polarisation. Accordingly, the diffraction order encoder can be configured to encode the at least one diffraction order with a polarisation state different to that of at least one other diffraction order. For instance, the diffraction order encoder could be configured to encode one diffraction order (e.g. the 0^{th} diffraction order) such that it is polarised (e.g. vertically polarised) (e.g. such that it has a degree of polarisation of at least 0.5 or 50%, preferably at least 0.75 or 75%, more preferably at least 0.85 or 85%, for example at least 0.9 or 90%). The other diffraction orders could remain unpolarised, or one or more of the other diffraction orders (e.g. the +/-1^{st} diffraction orders) could be polarised differently (e.g. orthogonally) to the 0^{th} diffraction order. The diffraction order encoder can comprise at least one polariser element configured to encode the at least one diffraction order with a polarisation state different to that of at least one other diffraction order. In particularly preferred embodiments, the diffraction order encoder comprises a first polariser element configured to encode the 0^{th} diffraction order with a first polarisation state, and second and third polariser elements configured to encode the +/- 1^{st} diffraction orders with a second polarisation state different to the first polarisation state. Optionally, a polariser element comprises a polariser configured to polarise (e.g. increase the degree of polarisation of) at least one diffraction order. Optionally, a polariser element comprises at least one polarisation manipulator, e.g. a waveplate or retarder, configured to change the polarisation state of at least one diffraction order, e.g. configured to rotate the polarisation orientation of said at least one diffraction order. In such a case, the diffraction order(s) will need to be polarised before the diffraction order encoder. For example, the light source could be a polarised light source, or a polariser can be placed in the optical path before the waveplate.

Said optical state can comprise a wavelength state. For example, the diffraction order encoder could be configured to encode the at least one diffraction order with a wavelength state different to that of at least one other diffraction order. For instance, the diffraction order encoder could be configured to encode one diffraction order (e.g. the 0^{th} diffraction order) such that it has light falling within a first band of wavelengths. The apparatus could be configured such that the wavelengths of the other diffraction orders remain unchanged, or alternatively the apparatus could be configured such that the diffraction order encoder encodes one or more of the other diffraction orders (e.g. the +/-1^{st} diffraction orders) with a second band of wavelengths different to the first band of wavelengths.

The light source and the diffraction order encoder could be provided on a single mount member, in other words a single substrate, for instance a glass substrate.

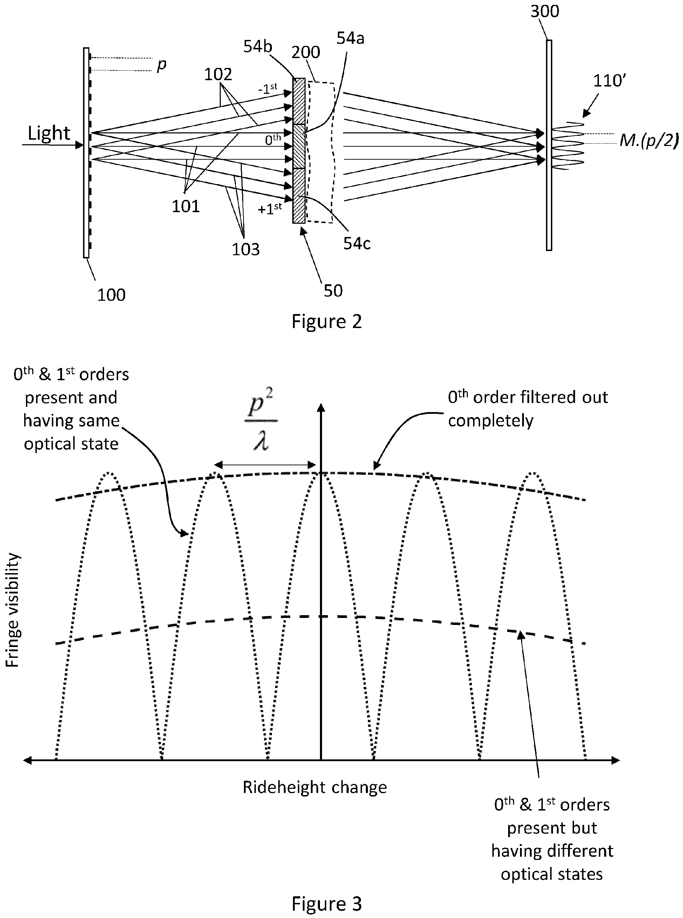

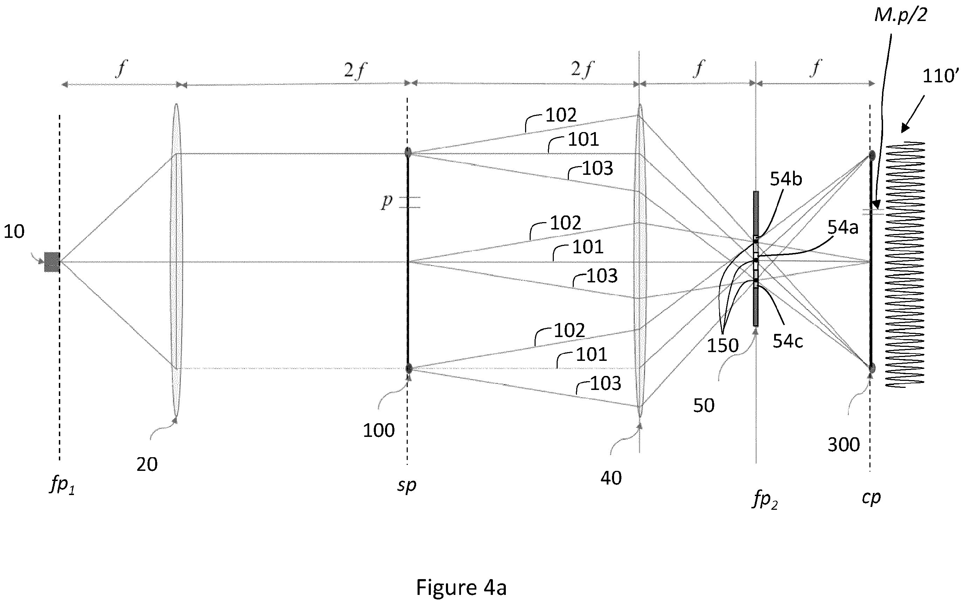

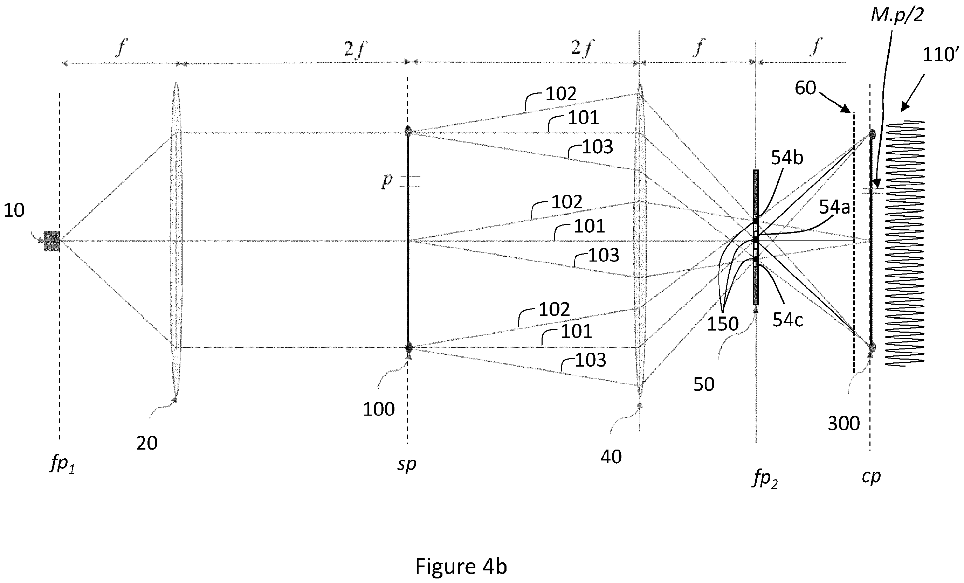

The readhead can comprise at least one optical element for relaying diffraction orders from the scale toward the at least first sensor. For instance, the readhead can comprise at least one refractive and/or diffractive optical element for relaying diffraction orders from the scale toward the at least one sensor. Suitable optical elements include a lens and/or a diffraction grating. The diffraction order encoder could be located to interact with the one or more diffraction orders before the optical element for relaying diffraction orders (e.g. as per Figure 2) or after the optical element for relaying diffraction orders (e.g. as per Figure 4). Optionally, the diffraction order encoder and optical element for relaying diffraction orders could be one and the same thing (e.g. the relay element 200 of Figure 2 could comprise the diffraction order encoder 50 integrated within it).

Optionally, the apparatus is configured such that the diffraction orders converge to corresponding/respective spots (or "different points of convergence") in the optical path between the optical element and the sensor. For instance, there can be a spot/point of convergence for each diffraction order, e.g. a 0^{th} diffraction order spot/point of convergence, a +1^{st} diffraction order spot/point of convergence, a -1^{st} diffraction order spot/point of convergence, and so on. Such spots could be located at a focal plane of the optical element for relaying the diffraction orders (focal plane of the lens). The diffraction order encoder can be located substantially at those points of convergence. For example, the diffraction order encoder can be located at the focal plane of the optical element for relaying the diffraction orders, for example at the focal plane of the optical element. The spots could be formed at a conjugate plane of the light source. Accordingly, the spots could be images of the light source.

The position measurement encoder apparatus could be configured to also attenuate the influence of the diffraction orders greater than the +/-1^{st} diffraction orders on the production of the resultant field sensed by the first sensor (and/or second sensor if present). Such diffraction orders could include, for example the +/-3^{rd} diffraction orders and/or the +/-5^{th} diffraction orders. The position measurement encoder apparatus could be configured to stop the diffraction orders greater than the +/-1^{st} diffraction orders from reaching the at least first second (and second sensor if present). Such diffraction orders could be stopped by way of absorption, deflection, scattering and/or reflection. For instance, opaque material can be located at said above-described spots for select or all diffraction orders greater +/-1^{st} diffraction orders than the at the conjugate plane of the light source so as to absorb and block such diffraction orders. Optionally, the diffraction order encoder is configured to encode diffraction orders greater +/-1^{st} diffraction orders with an optical state such that they do not interact/interfere with the 0^{th} and/or +/-1^{st} diffraction orders at the at least first sensor (and second sensor if present), or such that they are at least partially (e.g. substantially) filtered out by an appropriate filter before they reach the at least first sensor (and second sensor if present) (e.g. are filtered out by the first-sensor filter and/or second-sensor filter).

The scale could be illuminated with collimated light (and optionally the diffraction orders from the scale could themselves be collimated). Optionally, the readhead comprises an optical element for collimating light from the light source. Optionally, the same optical element is used for collimating light from the light source and for relaying the diffraction orders toward the at least first sensor. Optionally, the same optical element is used for collimating light from the light source and for causing the diffraction orders to converge to corresponding/respective spots.

The apparatus can be configured such that the at least first sensor is located substantially at a conjugate plane of the scale. Accordingly, the position measurement encoder apparatus could be described as being an imaging encoder apparatus, wherein an image (or pseudo-image) of the scale is formed at the at least one sensor.

Preferably the scale comprises what is commonly referred to as an amplitude scale or "Ronchi" scale. As will be understood, in an amplitude or "Ronchi" scale, the features are configured to control the amplitude of light reflected (or transmitted in a transmission scale embodiment) toward the readhead's sensor, e.g. by selectively absorbing, scattering and/or reflecting the light. Amplitude or "Ronchi" scale is to be contrasted with phase scale wherein the features are configured to control the phase of light reflected (or transmitted) toward the readhead's sensor (e.g. by retarding the phase of the light). Typically, amplitude scale produces significant 0^{th} diffraction order along with significant +/-1^{st} diffraction orders (plus higher +/- odd diffraction orders of decreasing intensity), which is in contrast to phase scale which does not produce any 0^{th} diffraction order.

Optionally, the period of the scale is not more than 40 µm, preferably not more than 20 µm, for instance not more than 10µm, for example approximately 8 µm.

Preferably, the scale comprises a feature-space (or "mark"-space) ratio of 1:1. Accordingly, in other words, the ratio of the width of the scale features to their spacing of the scale is 1:1.

The scale could be a transmissive scale. Preferably the scale is a reflective scale. Accordingly, preferably the light source and at least one sensor of the readhead are located on the same side of the scale.

Optionally, the position measurement encoder apparatus is a one-grating encoder system, wherein the scale comprises the only diffraction grating in the optical path between the light source and the at least one sensor.

The scale's series of position features could be provided in at least one track (a "scale track"). The scale could comprise one or more scale tracks.

The signal produced at the at least first sensor can comprise an incremental position signal, for instance an interference fringe pattern or modulated spots. Accordingly, the at least first sensor can comprise an incremental position sensor. The period of the fringe could be M.p/2, where M is the magnification factor of the encoder's optical system, and p is the period of the scale (this is the case/can be achieved when the 0^{th} diffraction order has been substantially removed. The scale can comprise an incremental scale, comprising a series of periodic features defining an incremental scale track. One or more reference marks can be provided, embedded within and/or located adj acent the incremental scale track. Such a reference mark can comprise an optical reference mark. The readhead can comprise at least a second sensor configured to detect the reference mark signal produced by the reference mark.

Optionally, the signal produced at the at least first sensor comprises an absolute position signal. Accordingly, the at least first sensor can comprise an absolute position sensor. Accordingly, the scale can comprise an absolute scale track, comprising a series of features defining an absolute scale track. As will be understood, an absolute scale track differs to an incremental scale track (with or without reference marks) in that its features define a series of unique positions along the length of the scale which can be readhead by the readhead such the relative position of the readhead and scale can be determined (e.g. on start-up) at any position along the scale without requiring movement to a reference position (e.g. a reference mark). Examples of absolute scales include those described in US7499827 and US5279044.

The scale could comprise separate incremental and absolute scale tracks. Optionally, the incremental and absolute scale features are combined in one track. For instance, the absolute scale features could be superimposed on the periodic incremental scale features. As is known, and as is explained in the prior art referred to above in this paragraph, absolute position information can be encoded in a scale track by omitting select position features from an otherwise periodic series of position features.

As will be understood, the scale can comprise a first and a second series of position features which are readable by the readhead. As will be understood, the first series of position features can produce a first set of diffraction orders and the second series of position features can produce a second set of diffraction orders (which produce said signals detected by the first and second sensors). These first and second sets of diffraction orders can be superimposed on each other/spatially overlapping. It might be that the position measurement encoder apparatus is configured such that only one of the first and second sets of diffraction orders has diffraction orders having different optical states. For example, the position encoder apparatus could be configured such that at least one diffraction order (e.g. the 0^{th} diffraction order) of the first set of diffraction orders has an optical state different to that of at least one other diffraction order (e.g. the +/-1^{st} diffraction order) of the first set of diffraction orders, but the diffraction orders (e.g. at least the 0^{th} and +/-1^{st} diffraction orders) of the second set of diffraction orders could have the same optical state. Alternatively, the position measurement encoder apparatus could be configured such that at least one diffraction order of the first set of diffraction orders has an optical state different to that of at least one other diffraction order, and such that at least one diffraction order of the second set of diffraction orders has an optical state different to that of at least one other diffraction order. Either way, as will be understood, the first and second sets of diffraction orders can be filtered differently based on their optical states.

The first and/or second series of position features can be periodic (in other words, the scale can comprise a first periodic series of position features and a second periodic series of position features). The period of the first series of position features can be different to the period of the second series of position features. For instance, the scale can comprise a scale track comprising a first series of position features having a first period (e.g. a relatively fine period) and a second series of position features having a second period (e.g. a relatively coarse period, i.e. coarser than the period of the first period). The first and/or second series of position features can be provided in the same track, i.e. embedded within each other/superimposed on each other.

According to another aspect of the invention there is provided a position measurement encoder apparatus, comprising: a scale comprising a series of periodic features configured to diffract light into multiple diffraction orders, including a 0^{th} diffraction order; a readhead comprising a light source for illuminating the scale, and at least one sensor configured to detect an interference fringe pattern/fringe field which moves with relative motion of the scale and readhead, the interference fringe pattern/fringe field being produced by the diffraction orders from the scale at the at least one sensor; in which the period of the fringe is M.p/2, where M is the magnification factor of the encoder's optical system, and p is the period of the scale.

According to another aspect of the invention there is provided a position measurement encoder apparatus, comprising: a scale comprising a series of periodic features configured to diffract light into multiple diffraction orders, including a 0^{th} diffraction order; a readhead comprising a light source for illuminating the scale, and at least one sensor configured to detect a resultant field which changes with relative motion of the scale and readhead, the resultant field being produced by the diffraction orders from the scale at the at least one sensor; in which the readhead is configured such that the 0^{th} diffraction order does not contribute to the production of the resultant field at the at least one sensor.

Embodiments of the invention will now be described, by way of example only, with reference to the following drawings, in which:
Figures 1a and 1b are schematic diagrams, illustrating the optical workings of a generic prior art position encoder system;
Figure 2 is a schematic diagram, illustrating the optical workings of a position encoder apparatus arranged in accordance with the present invention;
Figure 3 is a graph illustrating the effect the 0^{th} order has on the visibility of the fringes falling on the sensor as the distance between the scale and the readhead changes;
Figures 4a and b are optical diagrams illustrating alternative embodiments of the invention;
Figures 5a and 5b are optical diagrams illustrating another alternative embodiment of the invention;
Figures 6a and 6b are optical diagrams of yet further alternative embodiments of the invention;
Figure 7 schematically illustrates a readhead incorporating the optical arrangement of Figures 6a and 6b, along with an associated scale;
Figure 8 schematically illustrates the arrangement of the components of Figures 6a and 6b within the readhead of Figure 7;
Figure 9 shows a plan view of the glass substrate of Figure 8;
Figure 10 an optical diagram of yet another alternative embodiment of the invention;
Figure 11 illustrates an example electrograting sensor;
Figure 12 schematically illustrates an encoder apparatus according to another embodiment of the invention;
Figure 13 illustrates an incremental scale and a readhead an encoder apparatus according to another embodiment of the invention;
Figure 14 illustrates an incremental scale and a readhead an encoder apparatus according to another embodiment of the invention; and
Figure 15 illustrates an absolute scale and readhead of an encoder apparatus according to another embodiment of the invention; and
Figure 16 schematically illustrates an absolute scale and readhead of an encoder apparatus according to another embodiment of the present invention.

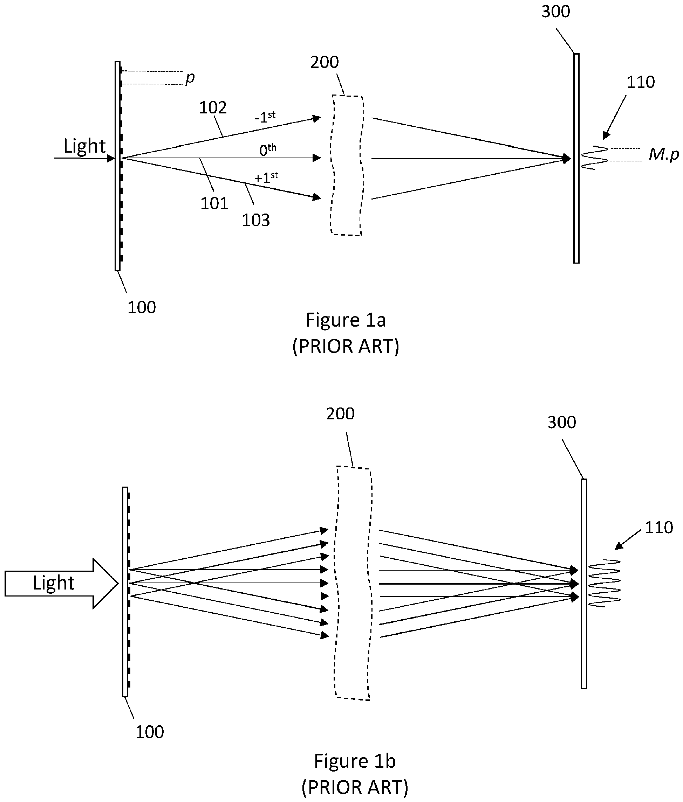

Referring to Figures, Figure 1a schematically illustrates the optical workings of a generic prior art position encoder system where a scale 100 having a periodic series of features having a period "p" is illuminated by light, thereby producing a set of diffraction orders 101, 102, 103. As will be understood, references to light in this document include visible and non-visible light, from the ultraviolet to infra-red ranges. In the particular embodiment described, near infra-red light is used. The diffraction orders 101, 102, 103 are relayed to a sensor 300 by an optical element 200 (e.g. a lens, prism or a diffraction grating) (the sensor and optical element both being located in a readhead which is moveable relative to the scale 100). In particular, the diffraction orders interfere at the sensor 300, thereby producing an interference fringe pattern/fringe field (schematically illustrated by the wave 110) at the sensor 300 having a period equal to *M.p;* where AT is the magnifying factor of the optical system and p is the scale period. In Figure 1a, the light is shown as being transmitted through the scale, although as will be understood, the light could be reflected from the scale, and so could originate from a light source located on the same side of the scale as the sensor. As will be understood, typically, the source of the light, the relay element 200 and the sensor 300 are all provided by/in a readhead device which is configured to move relative to the scale 100.

As will be understood, Figure 1a is a simplified illustration of the optical situation encountered in an encoder apparatus. In reality, the optical situation shown in Figure 1a is repeated many times over along the length of the scale (i.e. over the area that is illuminated by the source), producing a longer interference fringe pattern/fringe field pattern at the detector (e.g. schematically illustrated in Figure 1b).

For illustrative purposes in Figures 1a and 1b, only the 0^{th} and +/- 1^{st} orders are shown. As will be understood, higher diffraction orders will be produced, and can contribute to the formation of the interference fringe pattern/fringe field at the sensor 300, although their intensity and therefore contribution to the interference fringe pattern/fringe field are typically much weaker than the 0^{th} and +/- 1^{st} diffraction orders (with higher orders being progressively weaker in intensity).

As will be understood, where the mark-space ratio (i.e. the ratio of the width of the scale features to the spacing between the marks) of the scale is perfectly 1: 1 (as is often the case with amplitude scale for an encoder apparatus), even diffraction orders (e.g. +/- 2^{nd}, +/- 4^{th} diffraction orders) will not be produced, and only odd diffraction orders will be produced (e.g. +/- 3^{rd}, +/-5^{th} diffraction orders). In practice, some minor fabrication errors might mean that the mark-space ratio of the scale is not perfectly 1: 1 and so even diffraction orders might be present (albeit likely having significantly less intensity than adjacent odd diffraction orders). As will be understood, where the mark-space ratio of the scale is deliberately formed such that it is not 1: 1, then significant even diffraction orders can be present.

For the sake of simplicity of illustration, the ray diagrams of Figures 1a and 1b are shown as transmissive ray diagrams (that is the light is shown as being transmitted through each of the scale and optical element), whereas in reality at least one of these could be reflective.

Figure 2 is a schematic diagram, illustrating the optical workings of a position encoder apparatus similar to that of Figure 1b, but which has been modified in accordance with the present invention. In this case, the readhead comprises a diffraction order encoder 50, which encodes the 0^{th} diffraction order with a different optical state to that of the +/-1^{st} diffraction order. In this embodiment, the diffraction order encoder 50 comprises a first polariser portion 54a configured to encode the 0^{th} diffraction order with a first polarisation state and two second polarisation portions 54b, 54c configured to encode the +/-1^{st} diffraction orders with a second polarisation state that is orthogonal to that of the 0^{th} diffraction order. Accordingly, due to the 0^{th} and the +/-1^{st} diffraction orders being encoded with orthogonal polarisation states, they do not interfere (constructively or destructively) with each other when they fall on the sensor. This means that the 0^{th} order does not contribute to the modulated part of the interference fringe pattern formed on the sensor. This provides a number of improvements to the interference fringe pattern/fringe field 110' which falls on the sensor 300

In particular, Figure 3 shows the effect encoding the 0^{th} and +/-1^{st} diffraction orders with orthogonal polarisation states has on the visibility of the fringes falling on the sensor 300 as the distance between the scale 100 and the optical element 200 readhead (commonly known as the "rideheight" of the readhead relative to the scale) changes. As shown, when the 0^{th} diffraction and +/-1^{st} diffraction orders have the same polarisation state (which includes, for example them both being unpolarised) such that the 0^{th} and +/-1^{st} diffraction orders interfere with each other and such that the 0^{th} diffraction order contributes fully to the interference fringe pattern/fringe field, the visibility of the interference fringe pattern/fringe field is modulated with a period of *p*²/λ, where *p* is the scale period and λ is the wavelength of the light. If the 0^{th} and +/-1^{st} diffraction orders are encoded with orthogonal polarisation states such that they do not interfere with each other at the sensor plane, the modulation is no longer present. This is beneficial because it allows an encoder apparatus with a scale which produces a 0^{th} diffraction order to have a rideheight tolerance which is independent of the scale period.

Another advantage of encoding the 0^{th} and +/-1^{st} diffraction orders with orthogonal polarisation states is that (as schematically shown in Figure 2) the interference fringe pattern/fringe field 110' produced at the sensor 300 has a period equal to M.p/2, which is half that of a system in which the 0^{th} and +/-1^{st} diffraction orders have the same polarisation states, e.g. such as that of the system of Figure 1. Accordingly, encoding the 0^{th} and +/-1^{st} diffraction orders with orthogonal polarisation states effectively doubles the system resolution.

Furthermore, if the diffraction orders >1^{st} are also encoded with an optical state different to the +/-1^{st} diffraction order (as per an embodiment described below), then higher order harmonics are removed from the interference fringe pattern/fringe field, providing a purer interference fringe pattern.

Figure 4a shows an optical diagram illustrating an embodiment of the invention which use a lens 40 to form an image of the light source 10. In Figure 4a, light from the light source 10 is collimated by a first lens 20 before it hits the scale 100, and the 0^{th} (101), -1^{st} (102) and +1^{st} (103) diffracted orders are shown incident upon a second lens 40. The second lens 40 causes corresponding diffraction orders to converge so as to form spots 150 at the back focal plane *(fp₂)* of the second lens 40; each spot 150 being formed from a respective diffraction order. The spots 150 are images of the light source 10, in that the back focal plane *fp₂* is the conjugate plane of the plane at which the light source 10 is located.

In the same way as illustrated in Figure 2, the diffraction order encoder 50 can encode the 0^{th} diffraction order (101) coming from the scale with an optical state that is different to the +/-1^{st} diffraction orders (102, 103) coming from the scale. The +/- 1^{st} diffraction orders 102, 103, propagate toward the sensor 300 and interact (constructively and destructively interfere) to form a interference fringe pattern/fringe field (schematically illustrated by the wave 110') which falls on the sensor 300. The 0^{th} diffraction order also propagates toward and falls on the sensor 300. It does not interfere with the +/- 1^{st} diffraction orders and so does not contribute (or interfere with) the interference fringe pattern/fringe field 110'. However, the 0^{th} diffraction order is sensed by the sensor 300 and therefore the output of the sensor 300 is affected by the 0^{th} diffraction order. However, the intensity of 0^{th} order falling on the sensor will be substantially constant and therefore appears as a constant background signal on the sensor's output as opposed to a varying signal which would interfere with the varying signal which represents the detected interference fringe pattern and which is used for position measurement.

The interference fringe pattern/fringe field 110' could be described as being an image of the scale 100, in that the sensor 300 is positioned at the conjugate plane *cp* of the scale plane *sp* (such that, for example, light from point A on the scale is imaged to point A' on the sensor, light from point B on the scale is imaged to point B' on the sensor, and light from point C on the scale is imaged to point C' on the sensor). However, as will be understood, the interference fringe pattern/fringe field 110' (i.e. the so-called "image") at sensor 300 will have a sinusoidal form, whereas a perfect image of the scale would have a square-wave form. Furthermore, by preventing the 0^{th} diffraction order (and diffraction orders greater than the 1^{st} diffraction order, either via blocking them or by encoding them, e.g. in the same way as the 0^{th} diffraction order) from contributing to the modulated part of the interference fringe pattern/fringe field formed on the sensor means that the image at sensor 300 has an even purer sinusoidal form, and so the image on the sensor is not actually a "true" or "perfect" image of the scale 100 (but rather could be referred to as a pseudo-image of the scale). Due to the encoder 50 effectively preventing all but the +/- 1^{st} diffraction orders from contributing the interference fringe pattern/fringe field 110', the interference fringe pattern/fringe field 110' will (but for lens aberrations) be a pure sinusoid, and the period of the interference fringe pattern/fringe field 110' will be M.p/2 (where M is the magnifying factor of the optical system and *p* is the scale period). In this embodiment M does not change with changes in the spacing between the scale 100 and the lens 40.

Figure 4b illustrates an alternative embodiment of the invention. The embodiment of Figure 4b is identical to that of Figure 4a except that a polarising element 60 is located in front of the sensor 300 with its polarisation direction arranged orthogonal the polarisation direction of the 0^{th} diffraction order so as to suppress/block the 0^{th} diffraction order, but allow passage of the +/-1^{st} diffraction orders to the sensor. In this case, the 0^{th} diffraction order does not fall on the sensor at all (and similarly, if the diffraction orders greater than the +/-1^{st} diffraction order are polarised with the same polarisation orientation as the 0^{th} diffraction order, they too will not fall on the sensor). Blocking the 0^{th} diffraction order from reaching the sensor greatly improves the interference fringe pattern sensed by the sensor 300. Indeed, as described above in connection with the other embodiments, and as shown in Figure 3, when the 0^{th} diffraction and +/-1^{st} diffraction orders both contributes fully to the interference fringe pattern/fringe field, the visibility of the interference fringe pattern/fringe field is modulated with a period of *p*²/λ, where *p* is the scale period and λ is the wavelength of the light. If the 0^{th} order is blocked such that it does not fall on the sensor, the modulation is no longer present. Also, as schematically illustrated in Figure 2, removal of the 0^{th} diffraction order means that the interference fringe pattern/fringe field 110' produced at the sensor 300 has a period equal to M.*p*/*2* (which is half of the system of Figure 1). Accordingly, blocking the 0^{th} diffraction order effectively doubles the system resolution. These are the same effects as described above which are experienced when encoding the 0^{th} and +/-1^{st} diffraction orders with different optical states so that they do not interact/interfere at the sensor. However, as illustrated in Figure 3, blocking the 0^{th} diffraction order such that it does not reach the sensor at all has the additional benefit that the fringe visibility is significantly improved compared to the situation in which the 0^{th} diffraction order is still present on the sensor, albeit having a different optical state to the +/-1^{st} diffraction orders.

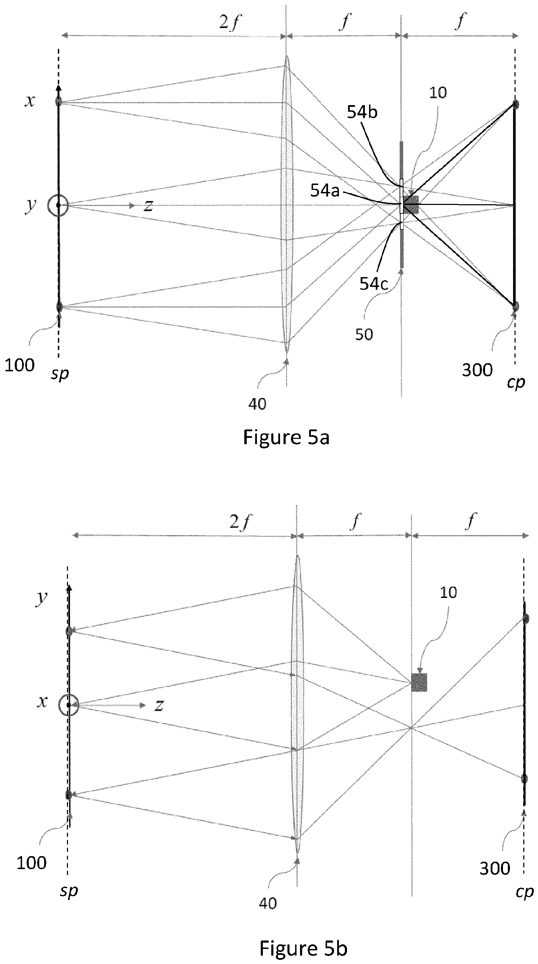

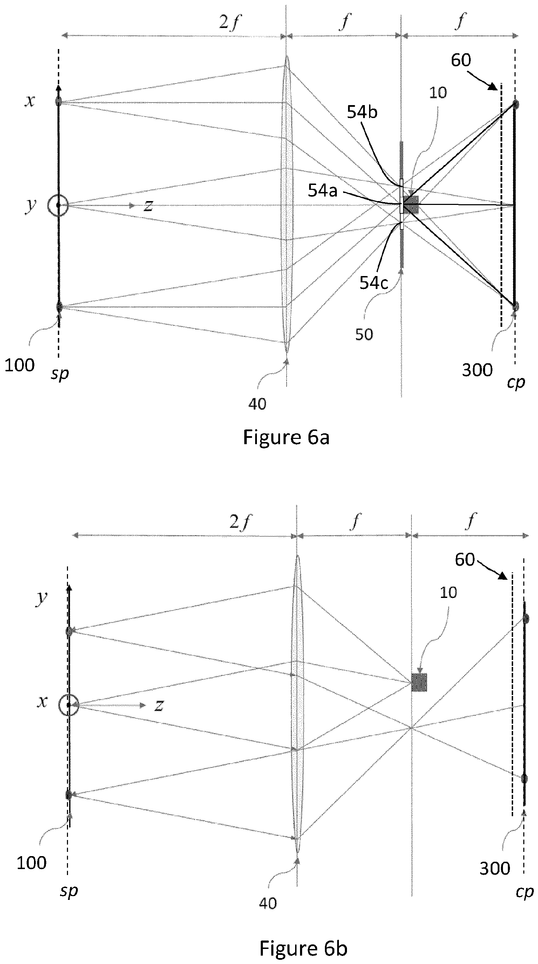

The embodiments of Figure 4a and 4b are transmissive optical systems, wherein light from the light source 10 is transmitted through the scale 100. Figures 5a and 5b and 6a and 6b shows the same optical schemes, but for a reflective (or "folded") optical system, wherein light from the light source 10 is reflected by the scale 100. In this case, only a single lens 40 is used to collimate the light from the light source 10 and to form conjugates between the scale 100 and the sensor 300. In the view shown in Figure 5a/6a, the part of the diffraction order encoder which encodes the 0^{th} diffraction order appears to be coincident with the light source 10, but as shown in Figure Sb/6b, it is in fact offset along the y-axis.

In the embodiments of Figures 4, 5 and 6 the optical system is such that an image of the light source 10 is formed at the plane *fp₂* where the diffraction order encoder 50 is located. However, this need not necessarily the case. For example, this is not the case in the embodiment of Figure 2.

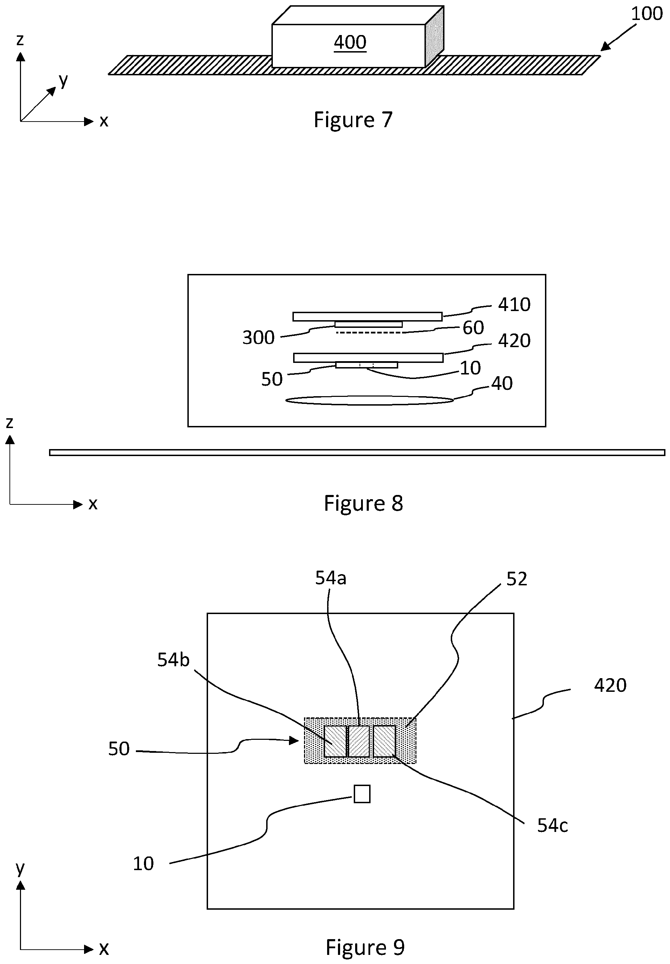

Figure 7 schematically illustrates a readhead 400 incorporating an optical arrangement according to the invention, arranged to read the scale 100. As will be understood, the scale 100 will be secured to a first part (not shown) of machine and the readhead 400 will be secured to a second part (not shown) of the machine, wherein the first and second parts of the machine are moveable relative to each other, in this case along the x-axis.

As shown, the scale 100 comprises a series of scale markings defining an incremental track. In this embodiment, the encoder apparatus is an optical, diffraction-based encoder. Accordingly, the incremental track comprises a series of periodically arranged features which form a diffraction grating. The incremental track is what commonly referred to as an amplitude scale. As will be understood, in an amplitude scale, the features are configured to control the amplitude of light reflected (or transmitted in a transmission scale embodiment) toward the readhead's sensor (e.g. by selectively absorbing, scattering and/or reflecting the light). This is in contrast to a phase scale wherein the features are configured to control the phase of light reflected (or transmitted) toward the readhead's sensor (e.g. by retarding the phase of the light). Although not shown, as is commonly known in the field of position measurement encoders, one or more reference marks can be provided in an adjacent track (for example as described in US10281301), or embedded within the incremental track (for example as described in US7659992). In such a case, the readhead will have at least one sensor for detecting the reference mark.

Figure 8 schematically illustrates the arrangement of the components of Figures 5a and 5b within the readhead of Figure 7. As shown, the sensor 300 is mounted on a printed circuit board member (PCB) 410, and the diffraction order encoder 50 and light source 10 (which in the orientation shown is behind the diffraction order encoder 50) are mounted on a substrate, in this case a glass substrate 420. A plan view of the glass substrate 420 is shown in Figure 9, which also illustrates the arrangement of the light source 10 and the diffraction order encoder 50. In the embodiment shown of Figure 9, the diffraction order encoder 50 comprises an opaque area (shown as the dotted area 52 in Figure 9) on the glass, having first 54a,54b and third 54c elongated transparent slots. The first 54a transparent slot comprises a polariser having a first polarisation orientation, and the second 54b and third 54c transparent slots comprise polarisers having a second polarisation orientation arranged such that light passing therethrough is polarised with a polarisation orientation that is orthogonal to light that has passed through the first 54a transparent slot. The diffraction order encoder 50 is configured such that as per the optical diagrams of Figures 4, 5 and 6, the 0^{th} diffraction order from the scale passes through the first elongated transparent slot 54a (and is thereby encoded with a first polarisation orientation) and the +/- 1^{st} diffraction orders pass through the second 54b and third 54c elongated transparent slots (and are thereby encoded with a second polarisation orientation which is orthogonal to the first polarisation orientation) toward the sensor 300. Other diffraction orders (i.e. greater than +/-1^{st} diffraction orders) are stopped by the opaque area 52. The opaque area 52 can comprise a very thin (e.g.22here22.x. 200nm thick) metallic layer on the glass substrate 420. Alternatively, the opaque area 52 could comprise a thin metal shim with chemically etched slots. As will by understood, this opaque area 52 does not actually need to be opaque, but being opaque means that the other diffraction orders are blocked which can be beneficial.

In the described embodiment the light source 10 is a Light Emitting Diode ("LED"), in particular an infra-red LED. However, as will be understood, other types of light sources such as a Surface Emitting Laser (SEL), a Vertical Cavity Surface Emitting Laser (VCSEL), or an edge emitting laser could be used instead of an LED.

In the described embodiments, an interference fringe pattern is formed at the sensor 300. However, this need not necessarily be the case. For instance the optical system could be configured such that the diffraction orders produce a number of modulated spots at the sensor (the intensity of which change/are modulated with changes in the relative position of the readhead and scale). Similar to a system which produces an interference fringe pattern, in a system which produces modulated spots, encoding the 0^{th} and +/-1^{st} diffraction orders such that they do not interfere with each other at the sensor effectively doubles the resolution of the encoder system (in that the intensity of the spots modulate with a frequency of *p*/*2*). Similarly, encoding the diffraction orders higher than the +/-1^{st} diffraction orders with an optical state different to the +/-1^{st} diffraction orders reduces/removes, harmonics on the modulated spot intensity.

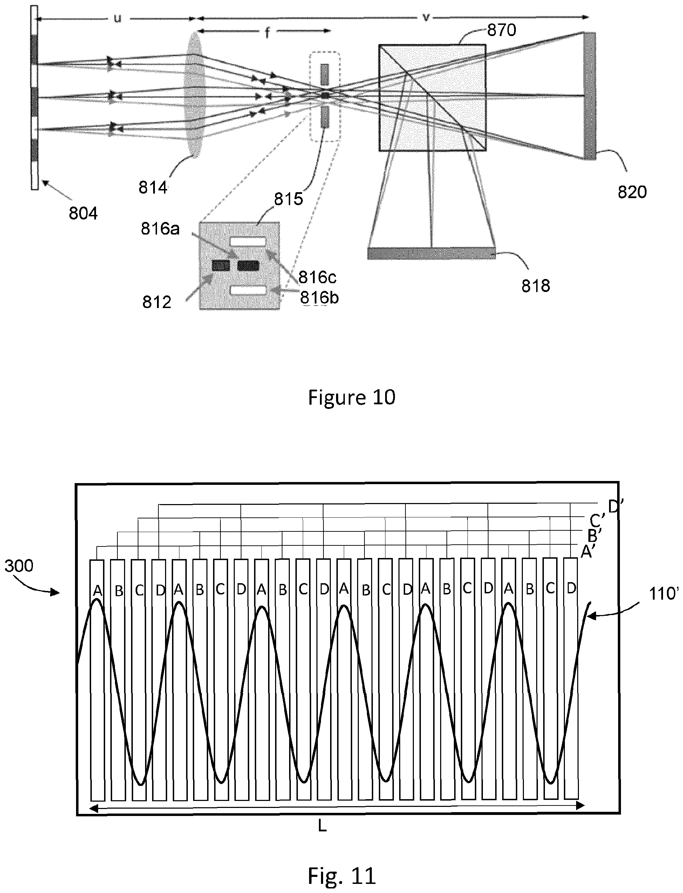

In the embodiment described, the sensor 300 is in the form of an electrograting, which in other words is a photo-sensor array which comprises two or more sets of interdigitated/interlaced/interleaved photo-sensitive sensor elements (also referred to herein as "photodetectors" or "fingers"). Each set can, for example, detect a different phase of the interference fringe pattern/fringe field (schematically represented by wave 110') at the sensor 300. An example of an electrograting is illustrated in Figure 11, in which a part of an electrograting is shown, and in which the fingers/photodiodes of four sets of photodiodes (A, B, C and D) are interdigitated/interleaved to form an array of sensor elements extending along the length "L" of the sensor.

The output from each finger/photodiode in a set is combined to provide a single output, thereby resulting in four channel outputs: A', B', C' and D'. These outputs are then used to obtain the quadrature signals SIN and COS. In particular, A'-C' is used to provide a first signal (SIN) and B'-D' is used to provide a second signal (COS) which is 90 degrees out of phase from the first signal. Although in the specific embodiment the electrograting comprises four sets of photodiodes providing four the channels A', B', C' and D', this need not necessarily be the case. For example, the electrograting could comprise two sets of photodiodes providing just two channels A' and B'.

As will be understood, other types of sensor could be used instead of the above described electrograting. For example, in embodiments in which modulated spots are created by the readhead's optical system instead of an interference fringe pattern, bulk sensor photodiodes could be used to detect the intensity of the modulated spots (e.g. as described in US4776701).

In the above-described embodiments, the 0^{th} and the +/-1^{st} diffraction orders are encoded with orthogonal polarisation orientations which means that they do not interact/interfere with each other at all at the sensor 300. This need not necessarily be the case. For instance, depending on the particular apparatus configuration, and/or the desired performance enhancement, sufficient benefit might be had from merely partially reducing the extent to which the 0^{th} diffraction order can interact/interfere with +/-1^{st} diffraction orders, e.g. by reducing the extent by which the 0^{th} diffraction order can interact/interfere with +/-1^{st} diffraction orders such that the influence the 0^{th} diffraction order has on the modulated part of the signal (e.g. the interference fringe pattern) sensed by the sensor is attenuated by at least 50%, although it is preferable that the influence the 0^{th} diffraction order has on the modulated part of the signal (e.g. the interference fringe pattern) sensed by the sensor is attenuated by at least 90%, for example by at least 95%, for instance by at least 98%. Accordingly, in such alternative embodiments, it could be that the diffraction order encoder 50 is configured to polarise only the 0^{th} diffraction order (accordingly regions 54b and 54c can be left empty with no polariser present leaving the +/-1^{st} diffraction orders unpolarised). In such an embodiment, the 0^{th} diffraction order has a different optical state (i.e. a polarised state) to that of the +/-1^{st} diffraction orders (i.e. an unpolarised state). Doing so would reduce the intensity of the 0^{th} diffraction order and thereby the extent to which it interacts with the +/-1^{st} diffraction orders, providing some improvement to the signal sensed by the sensor.

In another alternative embodiment, the diffraction order encoder 50 could be configured to polarise only the 0^{th} diffraction order (accordingly regions 54b and 54c can be left empty with no polariser present leaving the +/-1^{st} diffraction orders unpolarised), and a polarising filter can be provided in the readhead which is appropriately configured such that it blocks the polarised 0^{th} diffraction order from reaching the sensor 300.

In other embodiments, the polariser 54a for the 0^{th} diffraction order and the polarisers 54b, 54c for +/-1^{st} diffraction orders need not have their polarisation axes orthogonally arranged which would provide some improvement to the signal sensed by the sensor compared to if they were both left unpolarised (but of course the more orthogonal they are the more benefit that can be gained due to less interaction between the 0^{th} and +/-1^{st} diffraction orders).

In the embodiment of Figures 4a and 5, the 0^{th} diffraction order is sensed by the sensor 300 and the signal output by the sensor 300 contains 0^{th} diffraction order signal information. The embodiments of Figure 4b and 6 prevent the 0^{th} diffraction order from reaching the sensor by way of a polarising filter placed in front of the sensor. In an alternative embodiment, the sensor itself can be configured such that it does not sense the 0^{th} diffraction order (e.g. by way of an integrated polariser on the sensor), thereby negating the need for a separate polarising filter placed in front of the sensor.

In the embodiments described above, the light source 10 emits electromagnetic radiation (EMR) in the near infra-red range. However as will be understood, this need not necessarily be the case and could emit EMR in other ranges, for example anywhere in the infra-red to the ultra-violet. As will be understood, the choice of a suitable wavelength for the light source 10 can depend on many factors, including the availability of suitable gratings and detectors that work at the EMR wavelength.

In the embodiments described above, the light source 10 emits non-polarised light, the light hitting the scale is non-polarised and the diffraction orders coming off the scale 100 are non-polarised. However, this need not necessarily be the case. For instance, the light source 10 could emit polarised light or a polarised could be placed at a point between the light source 10 and the diffraction order encoder 50. In such a case, the diffraction order encoder could comprise one or more optical devices (e.g. one or more waveplates) for changing the polarisation orientation of one or more of the diffraction orders. For example, the first transparent region 54a of the diffraction order encoder 50 could comprise a half-waveplate which rotates the polarisation orientation of the 0^{th} diffraction order by 90°, and the second 54b and third 54c transparent regions could be clear and configured to not change the polarisation orientation of the +/-1^{st} diffraction orders (thereby resulting in the 0^{th} and +/-1^{st} diffraction orders having orthogonal polarisation orientations).

In the embodiments described above the main focus is on encoding the 0^{th} and +/-1^{st} diffraction orders such that they have different optical states. However, the invention could be used to encode different diffraction order combinations. For example, the diffraction orders could be encoded such that the 0^{th} and +/-1^{st} diffraction orders have the same optical state, but such that other diffraction order (e.g. the 3^{rd} diffraction order and/or the 5^{th} diffraction order) has an optical state different to the 0^{th} and +/-1^{st} diffraction order.

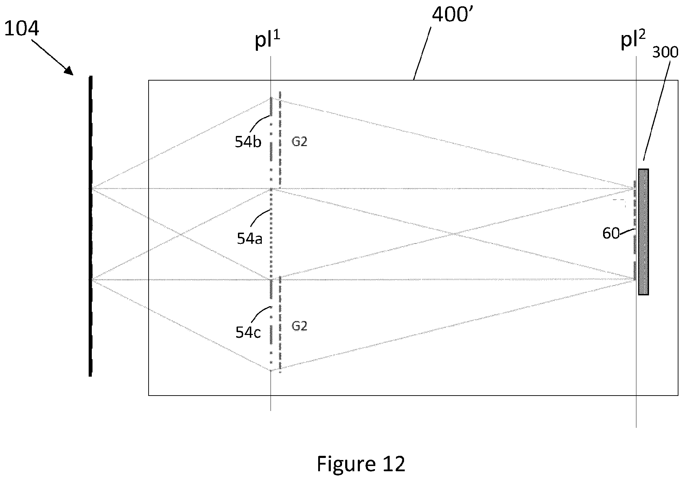

The above-described embodiments of Figures 4 to 9 use a refractive lens 40 to relay the diffraction orders toward the sensors. However, as will be understood, this need not necessarily be the case. For instance, Figure 12 schematically illustrates an optical system of an encoder apparatus comprising an incremental scale 100 and a readhead 400' according to another embodiment of the invention which is similar to that of Figure 6 (and like parts share like reference numerals) except that it does not rely on a refractive lens 40 to relay the diffraction orders toward the sensors. In this embodiment, 0^{th} and +/-1^{st} diffraction orders are produced from the light from the light source hitting and being reflected by the scale 100. As illustrated, the 0^{th} and +/-1^{st} diffraction orders are spatially separate at a first plane pl¹. The diffraction order encoder 50 is located at the first plane pl¹. As per the embodiment of Figure 6, the diffraction order encoder comprises a polarising filter 54a (e.g. having a "vertical" polarisation axis) which coincides with the 0^{th} diffraction order so as to encode the 0^{th} diffraction order with a first (e.g. vertical) polarisation orientation. The diffraction order encoder further comprises and second 54b and third 546c polarising filters which coincide with the + and - 1^{st} diffraction orders. The second 54b and third 54c polarising filters are configured with the same orientation as each other such that the +/-1^{st} diffraction orders have the same (e.g. "horizontal") polarisation orientation as each other, but different to the polarisation orientation of the 0^{th} diffraction order. Diffraction gratings G2 are located so as to cause the polarised +/-1^{st} diffraction orders to converge. The 0^{th} diffraction order is not deflected. Accordingly, the 0^{th} diffraction order and the +/-1^{st} diffraction orders meet at a plane pl² at which the sensor 300 is located. As per the embodiment of Figure 6, a first polariser 60 can be located in front of the sensor 300 and can be configured to filter out the 0^{th} diffraction order such that it doesn't reach the sensor 300. The light source 10 is omitted from Figure 12 for sake of clarity of illustration. As will be understood, a separate refractive lens or a grating can be used to collimate light from the light source toward the scale, if desired or necessary.

In the embodiments described above, the scale comprises an incremental scale without any reference marks. Of course, the scale could comprise one or more reference marks, for example one or more optical reference marks. Accordingly, the readhead could comprise one or more reference mark sensors. The encoding of the diffraction orders as described above could provide benefits for the detection of the reference mark. For instance, encoding the diffraction orders as described above can change the form of a reconstructed signal which may benefit reference mark detection. If desired, one or more filters could be provided for blocking one or more of the encoded diffraction orders from reaching the incremental and/or reference mark sensors. For example, a filter could be placed in front of the incremental sensor configured to block the encoded 0^{th} diffraction order from reaching the incremental sensor as described above in connection with Figures 4b and 6, but no filters are used in front of the reference mark sensor. Additionally or alternatively, a filter could be placed in front of the reference mark sensor and configured to block the encoded +/-1^{st} diffraction orders.

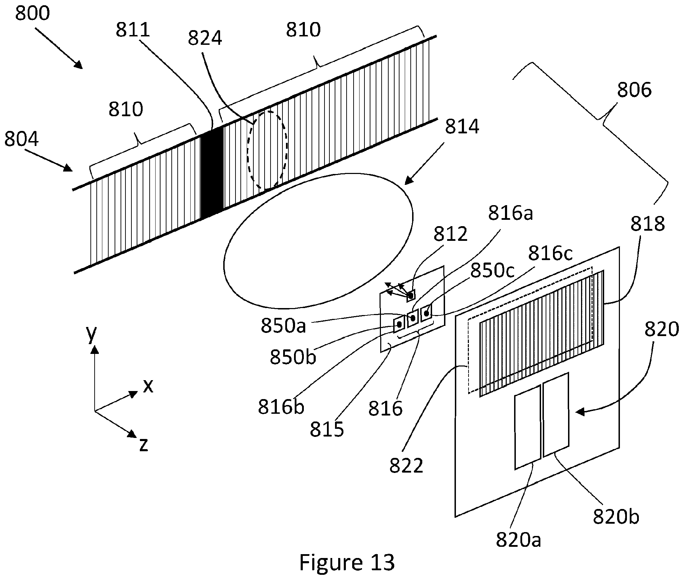

Figure 13 illustrates an example encoder apparatus 800 which comprises a reference mark and associated reference mark sensors. In this embodiment, the readhead 806 (the body of which is omitted for the sake of clarity) comprises a light source 812, in this embodiment in the form of a light emitting diode (LED) (which in this embodiment emits infra-red light), a lens 814, a diffraction order encoder 816 (which could also be called "an optical spatial encoder"), a first (hereinafter referred to as "primary") position information sensor 818, a second (hereinafter referred to as "secondary") position information sensor 820, and first("primary")-sensor filter 822. The light source 812 and diffraction order encoder 816 are provided in substantially the same plane, on an opaque substate 815. As will by understood, this substrate 815 area does not actually need to be opaque, but being opaque means that the other diffraction orders are blocked which can be beneficial. The primary position information sensor is configured to detect a signal/resultant field produced by the incremental features 810 and to output a signal from which the incremental position can be determined/monitored, and the second position information sensor is configured to detect a signal/resultant field produced by the reference mark 811 and to output a signal which indicates the presence of the reference mark. Accordingly, the primary position information sensor 818 could be (and will hereinafter be) referred to as an incremental sensor 818 and the secondary position information sensor 820 could be (and will hereinafter be) referred to as a reference mark sensor 820. Light from the LED 812 is emitted toward the scale 804 via the lens 814. The LED 812 is positioned substantially at the focal plane *fp* of the lens 814, such that light from the LED 812 is substantially collimated by the lens 814. The light from the LED 812 illuminates a footprint 824 on the scale. The lens 814 relays light reflected by the scale 804 to the incremental 818 and reference mark 820 sensors. The diffracted orders are incident on the lens 814, which causes corresponding diffraction orders to converge so as to form spots 850 at the back focal plane *fp* of the lens 814; each spot being formed from a respective diffraction order. The spots 850 are images of the light source, in that the back focal plane *fp* is the conjugate plane of the plane at which the light source is located.

The diffraction order encoder 816 is co-located with the spots 850. In particular, in this embodiment, the diffraction order encoder 816 comprises a polarising filter 816a (e.g. having a "vertical" polarisation axis) which coincides with the 0^{th} diffraction order spot 250a, and first 816b and second 816c non-polarised transparent regions which coincide with the +/-1^{st} diffraction order spots 850b, 850c. Accordingly, the diffraction order encoder 816 encodes the 0^{th} diffraction order with vertically polarised light whilst leaving the +/-1^{st} diffraction orders unpolarised. Accordingly, the 0^{th} diffraction order has a different optical state to that of the +/-1^{st} diffraction orders. As shown, the first 816a, second 816b and third 816c polarising filters are spaced apart from each other such that they do not directly touch each other, but this need not necessarily be the case.

The 0^{th} and +/-1^{st} diffraction orders propagate toward the incremental 818 and reference mark 820 sensors. As mentioned above, the primary-sensor filter 822 is located in the optical path of the diffraction orders heading toward the incremental sensor 818. The primary-sensor filter 822 comprises a polarising filter having a "horizontal" polarisation axis, i.e. one which is orthogonal to the polarisation axis of the first polarising filter 16a. Accordingly, 0^{th} order diffracted light is substantially blocked from reaching the primary position information sensor. In contrast, +/- 1^{st} order diffracted light can pass through the primary-sensor filter 822 (albeit becoming "horizontally" polarised in the process), and thereby fall on the incremental sensor 818. In particular, the +/- 1^{st} diffraction orders propagate toward the incremental sensor 818, and interact (constructively and destructively interfere) to form an interference fringe pattern (or "fringe field") which falls on the incremental sensor 818.

In the described embodiment, there is no corresponding filter in front of the reference mark sensor 820 (which in this embodiment comprises a split detector comprising first 820a and second 820b photodiodes). Accordingly, the 0^{th} and the +/-1^{st} diffraction orders all fall on the reference mark sensor 820. Depending on various factors (which will be described in more detail below) it could in some circumstances be favourable to not place a corresponding filter in front of the reference mark sensor. Indeed, if the presence of both the 0^{th} and the +/-1^{st} diffraction orders falling on the reference mark sensor have no detrimental effect on the optical signal, e.g. "image" or "pseudo-image" (see later), formed at the reference mark sensor 820, then there is no advantage to providing a corresponding filter in front of the reference mark sensor 820 (and indeed, doing so could be detrimental owing to reduced photometry, and/or could provide a sharper reference mark image).

One thing to note is that in this embodiment the 0^{th} order and the +/-1^{st} diffraction orders are unevenly attenuated due to only the 0^{th} order having been polarised by the first polariser 816a. If desired, uneven attenuation could be avoided by replacing the first 816b and second 816c non-polarised transparent regions with second 816b and third 816c polarising filters which have a "horizontal" polarisation axis (i.e. having a polarisation axis that is orthogonal to the polarisation axis of the first polarising filter 816a). In such an embodiment, the 0^{th} and the +/-1^{st} diffraction orders falling on the reference mark sensor 820 will have been equally attenuated, which could result in a better quality image falling on the reference mark sensor. Furthermore, the +/-1^{st} diffraction orders will still pass through the primary-sensor filter 822 and interfere to form an interference fringe pattern on the incremental sensor 18. In a further optional embodiment, a second("secondary")-sensor filter could be provided in front of the second/reference mark sensor 820 to filter-out one or more diffraction orders. For instance, in some circumstances (e.g. if the reference mark is structured/pattered) it might be beneficial to filter-out the +/-1^{st} diffraction orders (and optionally higher diffraction orders) such that the reference mark signal formed at the reference mark sensor is formed from only the 0^{th} diffraction order.

Figure 10 illustrates an embodiment which is substantially identical to that of Figure 13 described above, except that the primary-sensor filter 822 has been replaced with a polarising beam splitter 870, which splits the light from the diffraction order encoder 16 into two beams of orthogonal polarisation states. In particular, the polarising beam splitter 870 allows (predominantly) only vertically polarised to pass straight through it towards the reference mark sensor 820, and allows (predominantly) only horizontally polarised light to be deflected towards the incremental sensor 818. As a result, the 0^{th} diffraction (which has been vertically polarised by the first polarising filter 16a of the diffraction order encoder 16) does not propagate toward, nor contribute to the signal formed at the, incremental sensor 818 (because it has been substantially blocked by the polarising beam splitter 870), whereas both the 0^{th} and +/-1^{st} diffraction orders contribute to the signal formed at the reference mark sensor 20. The precise location of the polarising beam splitter is not crucial so long as it is disposed between the diffraction order encoder 816 and the detector plane(s). It may accordingly be advantageous in some applications to dispose the diffraction order encoder substrate on the front face of the polarising beam splitter, and/or the detectors 818, 820 on the exit faces.

In another alternative embodiment, the scale could comprise an absolute scale. The readhead for the absolute scale could be configured as described above, e.g. such that diffraction orders from the scale are encoded with different optical states. This could be such that the differently encoded diffraction orders do not interfere/interact with each other, thereby improving the signal sensed by the sensor. For instance, in such a case, it can be beneficial to encode diffraction orders in an absolute encoder such that the +/-1^{st} diffraction order and the 0^{th} diffraction orders have a different optical state. Again, this can mean that they do not interact thereby improving the signal of interested on the sensor. In a particularly preferred embodiment of an absolute encoder, the +/-1^{st} diffraction orders (and any higher orders if present in a significant extent) is substantially attenuated/blocked from reaching the readhead's sensor (or the sensor is blind to the optical state of the +/-1^{st} diffraction order) such that the substantially only 0^{th} diffraction order light falls on the readhead's sensor. For example, a suitably configured polariser can be located in from the sensor to filter out the +/-1^{st} diffraction order.

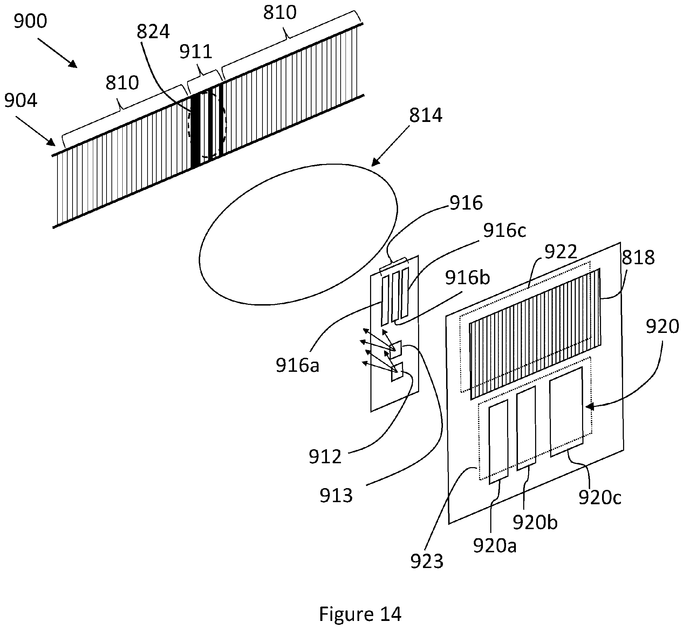

All of the above-described embodiments rely on polarisation to encode different diffraction orders with different optical states. However, this need not necessarily be the case. For example, different diffraction orders could be encoded with different wavelengths. Figure 14 illustrates such an embodiment. The encoder 900 of this embodiment has some similarities to the embodiment of Figure 13 and like parts share the same reference numeral. In this embodiment, the reference mark 911 comprises a structured/pattered reference mark, and therefore the reference mark sensor 920 comprises a corresponding pattern of photodiodes 920a, 920b, 920c configured such that when the readhead passes over the reference mark 911 an image of the reference mark 911 falls into registration with the photodiodes causing a sharp change in intensity of light falling thereon. Instead of the single LED 812 of the embodiment of Figure 13, this embodiment comprises a red LED 912 and a blue LED 913, the light from which is collimated by the lens 814 and illuminate a footprint 824 on the scale 904. In this embodiment there is provided a secondary-sensor filter 923 in front of the reference mark sensor 920. In this embodiment, the diffraction order encoder 916, and the primary 922 and secondary 923 sensor filters, comprise wavelength (e.g. coloured) filters as opposed to polarising filters in order to selectively control which diffraction orders do/do not contribute to the signals formed at the respective incremental sensor 818 and reference mark sensor 920. In particular, regarding the diffraction order encoder 916, the first wavelength filter 916a comprises a blue filter which encodes 0^{th} order with blue wavelengths only, and the second 916b and third 916c the wavelength filters comprise a red filter which encodes the +/-1^{st} diffraction orders with red wavelengths only. Accordingly, in order to prevent the 0^{th} diffraction order from contributing to the signal formed at the incremental sensor 818, the primary sensor filter 922 comprises a red wavelength filter to allow only light having red wavelengths through. Similarly, in order to prevent the +/-1^{st} diffraction order from contributing to the signal formed at the reference mark sensor 920, the secondary sensor filter 923 comprises a blue wavelength filter to allow only light having blue wavelengths through. As described above in connection with the other embodiments, if desired, the primary 922 or the secondary 923 sensor filter could be omitted. As will be understood, although in this example red and blue wavelengths are used, it is possible to use other wavelengths. Also, it is possible to use a single, polychromatic light source instead of two different monochromatic light sources.

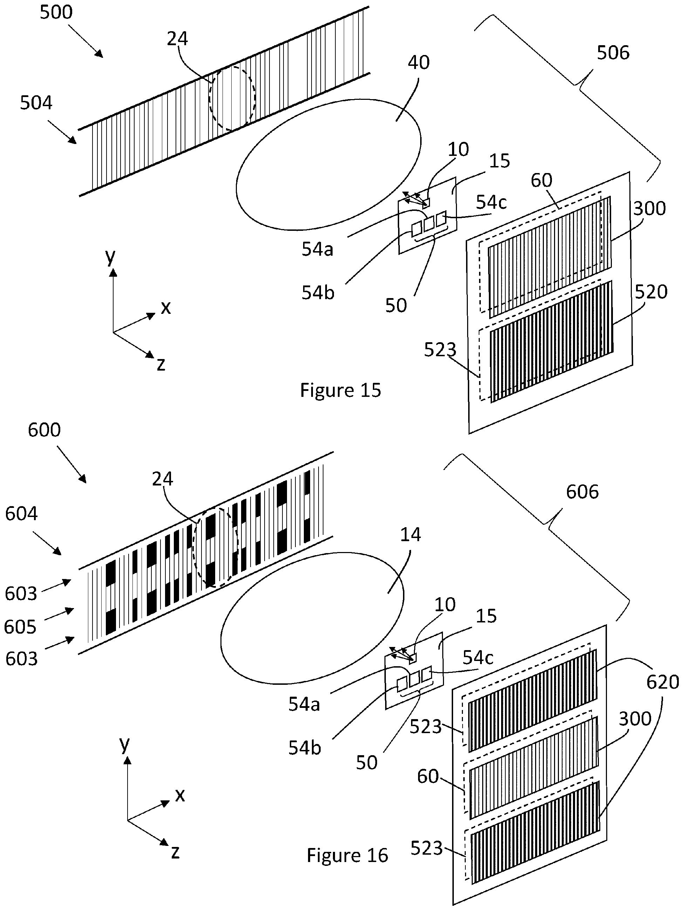

The embodiments described so far have been in connection with incremental encoders, comprising an incremental scale with (or optionally without) one or more reference marks. The invention can also be used with absolute encoders comprising absolute scale, such that those depicted in Figure 15. In the embodiment of Figure 15, the absolute scale 504 comprises features arranged notionally periodically, but wherein select features have been removed to encode unique/absolute position data along the measuring length of the scale. The data can be in the form of, for instance, a pseudorandom sequence or discrete codewords. Details of such a scale are described in more detail in US7499827 and US5279044. The readhead 506 (the body of which is omitted for the sake of clarity) shares some parts which are the same as those described above in connection with the other embodiments of the invention, and therefore like parts share the same reference numeral. For instance, the readhead 506 comprises a light source 10 (in this embodiment an unpolarised LED light source), a lens 14, and a diffraction order encoder 50.

In this embodiment, the readhead 506 comprises an absolute sensor 520, which comprises a photodiode array (in this embodiment a one-dimensional photodiode array, but it could be two-dimensional), on which an image (or "pseudo-image) falls. As is known, and for example described in US7499827, US5279044 and US 10989567, an image of the scale can be processed in order to extract the absolute/unique code so as to thereby determine an absolute position.

Similar to the reference mark embodiments described above, it can be beneficial to allow the 0^{th} order to contribute to the signal falling on the absolute sensor.

Furthermore, similar to the reference mark embodiments described above it can be beneficial to prevent the +/-1^{st} diffraction orders (and optionally higher orders) from contributing to the signal falling on the absolute sensor 520. Accordingly, a secondary-sensor filter 523 can be provided in front of the absolute sensor 520 which has a polarisation axis orthogonal to the polarisation axes of the second 54b and third 54c polarising filters of the diffraction order encoder 50. In particular, in this embodiment, the second 54b and third 54c polarising filters have a horizontal polarisation axis and the secondary-sensor filter 523 has a vertical polarisation axis.

In this embodiment, the readhead 506 further comprises an optional incremental detector 300 and primary-sensor filter 60, which are configured and arranged in the same manner as that described above in connection with the embodiments of Figure 6. The absolute position can be combined with the incremental position determined from the incremental detector 300 to provide a finer pitch absolute position. Optionally, once the absolute position has been determined, subsequent positions can be determined solely by monitoring the output from the incremental detector 300. In accordance with the embodiment of Figure 6, the 0^{th} order is blocked such that it does not contribute to forming the signal detected by the incremental sensor 18. As with the other embodiments, the primary-sensor filter 60 comprises a polarising filter having a polarisation axis which is perpendicular to the polarisation axis of the first polarising filter 54a of the diffraction order encoder 50. In particular, in this embodiment, the first polarising filter 54a has a vertical polarisation axis and the primary-sensor filter 60 has a horizontal polarisation axis.

Figure 16 illustrates another embodiment of an absolute encoder 600 comprising an absolute scale 604, which is substantially identical to that described above in connection with Figure 15 (and like part share the same reference numeral), except that in this embodiment, the scale comprises a multi-track arrangement wherein absolute code features are provided in absolute scale tracks 603 provided either side of a pure incremental track 605. As shown, the absolute scale tracks 603 also comprise the finer pitch/period incremental features in the spaces between the coarser pitch/period features of the absolute scale tracks 603. As an example, the coarse features of the absolute scale tracks which encode the absolute position information could have a nominal period of approximately 32µm and the finer pitch/period incremental features can have a period of approximately 8µm. As a result, there are effectively two sets of diffraction orders produced; a first set of diffraction orders which are produced by the first series of position features (e.g. the 8µm incremental scale features) and a second set of diffraction orders produced by the second series of position features (e.g. the absolute scale features). As it happens, in this embodiment, the 0^{th} diffraction order of the first set of diffraction orders passes through the first polarising filter 54a of the diffraction order encoder 50 and the +/-1^{st} diffraction order of the first set of diffraction orders passes through the second 54b and third 54c polarising filters, whereas the 0^{th} and the +/-1^{st} diffraction orders of the second set of diffraction orders all pass through the first polarising filter 54a of the diffraction order encoder 50. The higher diffraction orders of the first set of diffraction orders (e.g. the +/-3^{rd}, +/-5^{th} diffraction orders are blocked by the opaque substrate 15. The +/-3^{rd} diffraction orders of the second set of diffraction orders pass through the second 54b and third 54c polarising filters of the diffraction order encoder 50. Diffraction orders greater than the +/-3^{rd} of the second set of diffraction orders have substantially insignificant power, but what does exist of them will be blocked by the opaque substrate 15. As will be understood, which diffraction orders go through which filter is system dependent and can depend on various factors, including the size and/or position of the polarising filters.

As shown, the sensor arrangement of the embodiment of Figure 15 is slightly different to that of Figure 14 in that the absolute sensor 620 readhead is split into two with the incremental sensor 300 located therebetween. A variation of the embodiment of Figure 15 is that the absolute scale features extend fully across the incremental scale features (i.e. such that there isn't the track 605 of pure incremental scale between two absolute tracks 603). Rather, the absolute scale features can be fully embedded across the entire incremental features like that of Figure 14. In this case, the above comments regarding the two set of diffraction orders still apply due to the incremental and absolute position features having different nominal periods in this embodiment. If desired, in alternative configuration, the incremental sensor 300 and absolute sensor 620 can be arranged as per the embodiment of Figure 14 (i.e. two sensors side-by-side).

The invention is described above in connection with linear encoder apparatus. However, the invention is equally applicable to rotary encoder apparatus, including both ring encoders (wherein the scale features are formed on the outer cylindrical surface of a ring member) and disc encoders (wherein the scale features are formed on the planar face of a disc member).

## Claims

1. A position measurement encoder apparatus, comprising:
a scale comprising a series of position features which are readable by a readhead, the series extending along a measuring dimension, and which diffract light into multiple diffraction orders;
a readhead comprising a light source for illuminating the scale, and at least a first sensor configured to detect a signal produced thereat by one or more diffraction orders produced by the scale's series of position features which can be used to determine the relative position of the scale and readhead along the measuring dimension;
wherein the readhead further comprises a diffraction order encoder which encodes at least one diffraction order produced by the scale's series of position features with a different optical state to that of at least one other diffraction order produced by the scale's series of position features.

2. An apparatus as claimed in claim 1, in which the diffraction order encoder encodes the 0^{th} diffraction order with an optical state that is different to the +/-1^{st} diffraction order.

3. An apparatus as claimed in claim 1, comprising at least partially filtering-out at least one diffraction order based on its optical state so as to at least partially attenuate its influence on the production of the signal sensed by the first sensor.

4. An apparatus as claimed in claim 2 and 3, configured to: i) substantially filter out the 0^{th} diffraction order such that it has substantially no influence on the production of the signal sensed by the first sensor, or ii) substantially filter out the +/-1^{st} diffraction order such that it has substantially no influence on the production of the signal sensed by the first sensor.

5. An apparatus as claimed in any preceding claim, in which the diffraction order encoder encodes the at least one diffraction order with a polarisation state different to that of at least one other diffraction order.

6. An apparatus as claimed in any preceding claim, configured such that different diffraction orders of the light relayed to the at least first sensor converge to respective different points of convergence in the optical path between the scale and the at least first sensor.

7. An apparatus as claimed in claim 6, in which the points of convergence are located at the conjugate plane of the light source.

8. An apparatus as claimed in claim 6 or 7, in which the diffraction order encoder is located at said points of convergence.

9. An apparatus as claimed in any preceding claim, in which the first sensor comprises an incremental position sensor, configured to sense an incremental position signal.

10. An apparatus as claimed in any preceding claim, configured such that diffraction orders greater than the +/-1^{st} diffraction orders are not sensed by the at least first sensor.

11. An apparatus as claimed in any preceding claim, further comprising a second sensor configured to detect a signal produced thereat by said diffraction orders from the scale.

12. An apparatus as claimed in any preceding claim, comprising a first-sensor filter configured to filter light based on its optical state before it falls on the first sensor.

13. An apparatus as claimed in claims 11 and 12, comprising a second-sensor filter configured to filter light based on its optical state before it falls on the second sensor, the first-sensor filter and second-sensor filters being configured to filter light differently to each other.

14. An apparatus as claimed in any preceding claim, in which said optical state comprises a state of polarisation.

15. An apparatus as claimed in claims 12 or 13, and 14, in which the first-sensor filter and/or the second-sensor filter comprise a polarising filter.
